# EUROPÄISCHE PATENTANMELDUNG

(11) **EP 1 285 859 A2**
(43) Veröffentlichungstag der Anmeldung: **26.02.2003**
(21) Anmeldenummer: 02017909.9
(22) Anmeldetag: 09.08.2002
(51) Int. Cl.: B65D 65/42

(54) **Bedruckte bahnförmige Materialien, insbesondere für Abdeckungen von Behältern**

(30) Priorität: 14.08.2001 DE 20113491 U; 22.08.2001 DE 20113901 U
(71) Anmelder: Hueck Folien GmbH & Co. KG, 92712 Pirk (DE)
(72) Erfinder: Müller, Bernhard, Dr., 92637 Weiden (DE); Kammerer, Hans Hermann, 92637 Weiden (DE)
(74) Vertreter: Landgraf, Elvira, Dipl.-Ing.

(57) **Zusammenfassung**

Die Erfindung betrifft bedruckte bahnförmige Materialien, insbesondere für Abdeckungen von Behältern, wobei etwaige Aufdrucke auf der dem Füllgut abgewandten und/oder der dem Füllgut zugewandten Seite im Digitaldruck aufgebracht werden.

## Beschreibung

Bedruckte bahnförmige Materialien, insbesondere für Abdeckungen von Behältern

Die Erfindung betrifft bedruckte bahnförmige Materialien, insbesondere für Abdeckungen von Behältern.

Abdeckungsfolien von Behältern bestehen im allgemeinen aus Folienverbunden, die Metall- und/oder Kunststofffolien und/oder Papier enthalten oder Aluminiumfolien und weisen im allgemeinen einen Aufdruck auf. Dieser Aufdruck kann sowohl auf der Außenseite als auch auf der dem Füllgut zugewandten Seite angebracht sein.

Sofern mit solchen an der dem verpackten Füllgut zugewandten Seite mit einem Aufdruck versehenen Abdeckungen Behälter, in denen sensible Güter, beispielsweise Lebensmittel, Kindernahrung, Tierfutter, pharmazeutische oder kosmetische Präparate verpackt werden sollen, sind gesetzliche Vorgaben zu berücksichtigen. Die verwendeten Druckfarben müssen bei Kontakt mit den verpackten Gütern unbedenklich sein. Allerdings erfüllen nur wenige Druckfarben diese Anforderungen, sodass auch die Farbpalette sehr eingeschränkt ist.

Wird die Druckfarbe jedoch durch eine Sperrschicht vom verpackten Gut abgegrenzt, können sehr viele bekannten Druckfarben verwendet werden. Eine derartige Sperrschicht kann beispielsweise ein Heißsiegellack sein, der bei im Tief- Flexo- oder Siebdruckverfahren hergestellten Aufdrucken direkt auf den Druck aufgebracht werden kann.

Bei einem Aufdruck an der dem Füllgut abgewandten Seite hingegen ist zwar die Unbedenklichkeit der Druckfarben nicht unbedingt von entscheidender Bedeutung. Selbstverständlich dürfen die Druckfarben nicht toxisch oder gesundheitsschädlich sein. Allerdings ist hier die Temperaturbeständigkeit der Druckfarben der kritische Punkt.

Bei der Siegelung der Abdeckung werden Temperaturen von etwa 180 bis 300°C angewendet, Druckfarben, insbesondere im Digitaldruck verwendbare Druckfarben sind im allgemeinen nur bis zu Temperaturen von 100°C beständig.

Aufgabe der Erfindung ist es daher ein bedrucktes bahnförmiges Material bereitzustellen, das eine Bedruckung aufweist, die im Digitaldruck hergestellt wurde und hitzebeständig ausgerüstet ist.

Gegenstand der Erfindung ist daher ein bedrucktes bahnförmiges Material für Behälterabdeckungen, dadurch gekennzeichnet, dass auf eine Trägerbahn auf der Außenseite ein thermoplastischer Haftvermittler aufgebracht wird, anschließend der entsprechende Aufdruck aufgebracht ist, worauf die Druckfarbe mit einem Lack ähnlicher Zusammensetzung überlackiert wird, wobei ein Teil des im Lack vorhandenen bzw. gesondert aufgebrachten Härters in die Druckfarbe bzw. den Haftvermittler migriert und zu einer Vernetzung führt und/oder auf der dem Füllgut zugewandten Seite ein Haftvermittler, darauf ein Aufdruck aufgebracht wird, worauf auf die Druckfarbe ein Haftvermittler und ein Heißsiegellack aufgebracht wird.

Als Trägersubstrat kommen beispielsweise Trägerfolien vorzugsweise flexible Kunststofffolien, beispielsweise aus Pl, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 8 - 200 µm, besonders bevorzugt 12 - 90 µm auf.

Ferner können als Trägersubstrat Metallfolien, insbesondere AI-, aber auch Cu-Folien mit einer Dicke von 5 - 200 µm, vorzugsweise 10 bis 110 µm, besonders bevorzugt 20 - 90 µm dienen. Die Folien können auch oberflächenbehandelt, beschichtet oder kaschiert beispielsweise mit Kunststoffen, oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Ebenso können entsprechende Kunststoff-Metall- oder Papier-Metall-Verbunde, sowie auch mehrschichtige Verbund als Trägermaterial verwendet werden.
Bevorzugt werden Aluminiumfolien oder metallisierte Polyesterfolien verwendet.

Auf die Sichtseite wird auf die Trägerbahn ein thermoplastischer Haftvermittler aufgebracht.
Der thermoplastische Haftvermittler ist vorzugsweise eine Ethylen-Acrylat Copolymer-Dispersion mit einem mittleren Molekulargewicht von etwa 22 000 - 150 000 oder eine Mischung dieser Dispersion mit einem Polyester, Polyvinylacetat, Polyacrylat oder Polyamid.
Das Mischungsverhältnis kann dabei 9 : 1 bis 1 : 1 bezogen auf das Ethylen-Acrylat Copolymer betragen.
Der thermoplastische Haftvermittler weist im allgemeinen einen Erweichungspunkt von etwa 60 - 100 °C auf.

Vorzugsweise kann der thermoplastische Haftvermittler pigmentiert sein. Vorteilhafterweise ist der thermomplastische Haftvermittler weiß pigmentiert, wobei alle bekannten derartigen Pigmente verwendet werden können.
Gegebenenfalls kann durch die Pigmentierung eine vollflächige Überdruckung unterbleiben.

Anschließend wird in einem konventionellen Druckverfahren und/oder in einem Digitaldruckverfahren, vorzugsweise im Indigo-Verfahren, der entsprechende Aufdruck aufgebracht.
Diese Schicht wird anschließend mit einem Überlack versehen, wobei der Überlack eine dem thermoplastischen Haftvermittler ähnliche oder gleiche Zusammensetzung aufweist.

Der Überlack kann bereits 0,5 % - 10% eines Härters, beispielsweise ein polyfunktionelles Azyridin oder ein Melaminharz enthalten enthalten. Enthält dieser Überlack noch keinen Härter, so kann der Härter nach Aufbringung des Überlacks getrennt aufgebracht werden
Der Härter migriert in die Druckfarbe und in den auf die Trägerbahn aufgebrachten thermoplastischen Primer und vernetzt.

Dadurch wird das thermoplastische System, das eine relativ niedrige Erweichungstemperatur aufweist, hitzebeständig.
Im allgemeinen wird eine Hitzebeständigkeit von mindestens 250°C, vorzugsweise etwa 280°C und höher erreicht

Die Migration und Vernetzung ist zeitabhängig und kann bei Raumtemperatur etwa 24 bis 96 Stunden betragen. Durch Tempern ist auch eine Beschleunigung des Härtungsvorgangs möglich.

Aufgrund der nun erreichten Hitzebeständigkeit können anschließend übliche Heißsiegellacke verwendet werden um mit den erfindungsgemäßen Materialbahnen, gegebenenfalls nach Konfektionierung Behälter dicht zu verschließen.

Der thermoplastische Haftvermittler, der Überlack und gegebenenfalls der Härter kann in jedem üblichen Beschichtungsverfahren, beispielsweise wie beispielsweise einem Druckverfahren, wie Siebdruck-, Tiefdruck- Digital- oder Flexodruckverfahren, durch Aufstreichen, Sprühen, oder durch ein Walzenauftragsverfahren aufgebracht werden.
Der Aufdruck kann in jedem bekannten Druckverfahren, wie Siebdruck-, Tiefdruck- Digital- oder Flexodruckverfahren, vorzugsweise im Digitaldruckverfahren, beispielsweise im Indigoverfahren aufgebracht werden Auf die Rückseite der Trägerbahn wird ein Haftvermittler aufgebracht. Der Haftvermittler ist vorzugsweise eine Ethylen-Acrylat Copolymer-Dispersion mit einem mittleren Molekulargewicht von etwa 22 000 bis 150 000 oder eine Mischung dieser Dispersion mit einem Polyester, Polyvinylacetat, Ethylvinylalkohol, Polyacrylat oder Polyamid.
Das Mischungsverhältnis kann dabei 9 : 1 bis 1 : 1 bezogen auf das Ethylen-Acrylat Copolymer betragen.
Der thermoplastische Haftvermittler weist im allgemeinen einen Erweichungspunkt von etwa 60 - 100 °C auf.

Anschließend wird der gewünschte Aufdruck in einem bekannten Druckverfahren, wie Siebdruck-, Tiefdruck- Digital- oder Flexodruckverfahren, vorzugsweise im Digitaldruckverfahren, beispielsweise im Indigoverfahren aufgebracht.

Anschließend wird auf den Aufdruck ein Heißsiegellack aufgebracht . Geeignet sind bekannte Heißsiegellacke mit unterschiedlichen Siegeleigenschaften, die beispielsweise gegen Kunststoffe, wie PS, PP, PE, PET siegelfähig sind.

Zur Verbesserung der Haftung des Heißsiegellacks auf der bedruckten Trägerfolie kann gegebenenfalls vor Aufbringung des Heißsiegellacks ein Haftvermittler aufgebracht werden. Dies ist insbesondere vorteilhaft, wenn zur Herstellung des Aufdrucks das Indigo-verfahren verwendet wurde.

Vorzugsweise wird als Haftvermittler eine Polyester- Melaminharz- Mischung auf Lösemittelbasis verwendet, wobei das Verhältnis Polyesteranteil :
Melaminharzanteil etwa 2: 1 bis 3 : 1 betragen kann.

Die erfindungsgemäßen bedruckten bahnförmigen Materialien werden insbesondere für Behälterabdeckungen verwendet, insbesondere für Behälter für Nahrungsmittel, wie Milchprodukte, Obst- und Gemüsesäfte, Tiernahrungsund Tierpflegemittel, pharmazeutische und/oder kosmetische Produkte, Reinigungsmittel, Chemikalien und dergleichen.

### Beispiele:

### Beispiel 1:

Zur Herstellung einer heißsiegelfähigen Behälterabdeckung wird auf eine metallisierte Polyesterfolie einer Stärke von 23 µm als Haftvermittler eine Ethylen-Acrylat Copolymer(MG 50.000)/Polyester-Dispersion (2 : 1) aufgebracht. Anschließend wird im Indigo-Verfahren der Aufdruck aufgebracht, der mit einem hitzebeständigen Überlack bestehend aus einer Ethylen-Acrylat Copolymer(MG 50.000)/Polyester-Dispersion (2:1) mit 0,5 % polyfunktionellem Azyridin aufgebracht.

### Beispiel 2:

Die gemäß Beispiel 1 hergestellte einseitig bedruckte Folie wird nach vollständiger Aushärtung des hitzebeständigen Überlacks auf der Rückseite mit dem Haftvermittler beschichtet, anschließend wird der Aufdruck im Digitaldruckverfahren aufgebracht , worauf wiederum ein Haftvermittler und anschließend ein Heißsiegellack aufgebacht wird.

## Patentansprüche

1. Bedrucktes bahnförmiges Material für Behälterabdeckungen, **dadurch gekennzeichnet, dass** auf eine Trägerbahn auf der Außenseite ein thermoplastischer Haftvermittler aufgebracht wird, anschließend der entsprechende Aufdruck aufgebracht ist, worauf die Druckfarbe mit einem Lack ähnlicher Zusammensetzung überlackiert wird, wobei ein Teil des im Lack vorhandenen bzw. gesondert aufgebrachten Härters in die Druckfarbe bzw. den Haftvermittler migriert und zu einer Vernetzung führt und/oder auf der dem Füllgut zugewandten Seite ein Haftvermittler, darauf ein Aufdruck aufgebracht wird, worauf auf die Druckfarbe ein Haftvermittler und ein Heißsiegellack aufgebracht wird.

2. Bahnförmiges Material nach Anspruch 1, **dadurch gekennzeichnet, dass** der Aufdruck jeweils im Digitaldruckverfahren aufgebracht wird.

3. Bahnförmiges Material nach Anspruch 2, **dadurch gekennzeichnet, dass** der Aufdruck im Indigo-Verfahren aufgebracht wird.

4. Bahnförmiges Material nach einem der Ansprüche 1 bis 3, **dadurch gekennzeichnet, dass** der Überlack hitzebeständig ist.

5. Bahnförmiges Material nach einem der Ansprüche 1 bis 4, **dadurch gekennzeichnet, dass** der Überlack aus einer Ethylen-Acrylat Copolymer-Dispersion mit einem mittleren Molekulargewicht von etwa 22 000 - 150 000 oder eine Mischung dieser Dispersion mit einem Polyester, Polyvinylacetat, Polyacrylat oder Polyamid im Mischungsverhältnis 9 : 1 bis 1 : 1 bezogen auf das Ethylen-Acrylat Copolymer besteht.

6. Bahnförmiges Material nach einem der Ansprüche 1 bis 5, **dadurch gekennzeichnet, dass** der Überlack 0,5 - 10 % eines Härters enthält.

7. Bahnförmiges Material nach einem der Ansprüche 1 bis 5, **dadurch gekennzeichnet, dass** der Härter nach Aufbringen des Überlacks aufgebracht wird.

8. Bahnförmiges Material nach einem der Ansprüche 1 bis 7, **dadurch gekennzeichnet, dass** der Härter ein polyfunktionelles Azyridin oder ein Melaminharz ist.

9. Bahnförmiges Material nach einem der Ansprüche 1 bis 8,**dadurch gekennzeichnet, dass** der thermoplastische Haftvermittler pigmentiert ist.
